# EUROPEAN PATENT SPECIFICATION

(11) **EP 2 518 315 B1**
(45) Date of publication and mention of the grant of the patent: **23.09.2015**
(21) Application number: 12155169.1
(22) Date of filing: 13.02.2012
(51) Int. Cl.: F03D 11/00

(54) **Wind turbine power generating facilities**
Windturbinen-Stromerzeugungseinrichtungen
Installations de génération d'énergie d'éolienne

(30) Priority: 21.02.2011 JP 2011034080
(43) Date of publication of application: 31.10.2012
(73) Proprietor: Hitachi Industrial Equipment Systems Co., Ltd., Tokyo 101-0022 (JP)
(72) Inventor: Hayashi, Noriyuki, Tokyo, 100-8220 (JP); Matsuo, Takahide, Tokyo, 100-8220 (JP); Shirahata,Toshiki, Niigata, 959-2608 (JP); Ono, Junji, Niigata, 959-2608 (JP); Ohama, Hideharu, Tokyo 100-8220 (JP)
(74) Representative: MERH-IP Matias Erny Reichl Hoffmann

(56) References cited:
- EP-A1- 2 151 833
- WO-A1-01/06121
- WO-A1-99/30031
- DE-A1- 19 947 915

## Description

### [Technical Field]

The present invention relates to a wind turbine power generating facility and in particular to a wind turbine power generating facility suitable for a system having a transformer in the interior of a tower in which a power generating unit is installed at the top.

### [Background Art]

In general, a wind turbine power generating facility is constructed by erecting a tower on a foundation, providing a nacelle at the top of the tower, and connecting a rotor having blades to an electric generator in the nacelle; thereby the wind turbine power generating facility is configured to generates electric power with an electric generator by rotating the blades with wind. Further, it has electric power equipment such as a transformer to transform the electric power, a converter to convert the electric power to direct current or alternating current, and others, so as to be able to supply the electric power generated at the electric generator to an electric power system.

The above-mentioned electric power equipment such as a transformer although heretofore been installed in a building separated from the tower, in recent years, there are tendencies to eliminate the need to build another building for the electric power equipment by housing the equipment in the interior of a tower. An example of housing such a transformer and others in the interior of a tower is disclosed in Patent Document 1.

In Patent Document 1 (JP-T-2003-504562), there is disclosed a cooling circuit provided in the interior of a tower, and the cooling circuit comprising a closed circuit in which a heat-producing component such as a transformer is arranged at some midpoint in such a manner that saline air, humidity and the like does not come into contact with fragile components such as an electric generator, a rectifier, a transformer and others. That is, described are that: the heat-producing component such as the transformer is arranged in the interior of the tower; the cooling circuit comprising the closed circuit is provided such that the heat-producing component such as the transformer is provided in the some midpoint of the closed circuit; and thereby, heated air from the heat-producing component such as the transformer is cooled by exchanging the heat with outdoor air through an exterior wall of the tower during the process of forcibly circulating the heated air in the cooling circuit with a ventilator or the like installed in the cooling circuit, so that the cooled air is used again for cooling the heat-producing component.

In general, in a transformer, heat is generated mainly at an iron core and a winding wire during operation thereof, and a cooling medium in a tank absorbs the heat generated at the iron core and the winding wire resulting in increase of the temperature of the tank. The cooling medium heated at a high temperature releases the heat in the air around the transformer through a corrugated rib tank having a plurality of radiator ribs formed on the outer surface thereof or a self-cooling type radiator connected to a tank through upper and lower pipes but there is no mention at all of such heat releasing technical matters in Patent Document 1.

In a case that a transformer is housed in the interior of a tower of a wind turbine power generating facility, air heated by absorbing heat from a plurality of radiation ribs forming a corrugated rib tank or a self-cooling type radiator becomes low in density, becomes light in weight, and moves upward from the radiation ribs of the corrugated rib tank or the self-cooling type radiator. The upward-moving air diffuses immediately after that, and is mixed with air of a low temperature in the tower, thus the temperature of the upward-moving air decreases as the mixture advances resulting in the decrease of the flow rate of the upward-moving air. That is, the air does not move upward endlessly while keeping the high temperature but the range of the upward-moving air is thought to be several times as height as the radiation ribs of the corrugated rib tank or the self-cooling type radiator.

Meanwhile, the exterior wall of a tower is cooled by forced convection of wind blowing outside of the tower and natural convection of the atmospheric air, and hence the heat of the air in the interior of the tower in the vicinity of the exterior wall is absorbed by the atmospheric air through the exterior wall resulting in decrease of temperature of the air. The air becoming heavy with decrease of the temperature moves down along an inner surface of the exterior wall of the tower.

The upward-moving stream from the plurality of radiation ribs of the corrugated rib tank or the self-cooling type radiator and the downward-moving stream along the inner surface of the exterior wall of the tower are merged with each other and then form a circulating flow by natural convection. The heat generated at the transformer moves through the exterior wall of the tower during the circulating flow and is further released to the atmospheric air on an outer surface of the exterior wall.

Consequently, a region of the exterior wall of the tower capable of contributing to release the heat generated at the transformer by heat exchange between the air in the tower and the atmospheric air, is within a height of the circulating flow, and the height is thought to be several times as height as the radiation ribs of the corrugated rib tank or the self-cooling type radiator. The height corresponds to only a small part of the height of the tower of tens of meters or more in the wind turbine power generating facility, and is insufficient to obtain a heat transfer area for releasing the heat generated at the transformer. Therefore, the temperature of the air around the transformer in the interior of the tower increases in the same manner as an electric room of a transformer installed in a building and the interior of the tower comes to be a so-called heat-stuffy state.

This is a problem inherent to a transformer installed in the interior of the tower of a wind turbine power generating facility, and it is difficult to decrease the temperature of air around the transformer in the interior of the tower unless such a problem is solved.

Patent Document 1 however does not disclose about all of the structure of a transformer and it is obvious that the above-mentioned problem has not been recognized.

### [Summary of the Invention]

The present invention has been invented in view of the above situation. An object of the present invention is to provide a wind turbine power generating facility capable of decreasing the temperature of air around a transformer in the interior of a tower of the facility without installing a ventilating air-conditioning system in the interior of the tower even in the case of that the interior of the tower is provided with the transformer being configured to release heat to the outside through a corrugated rib tank or a radiator.

A wind turbine power generating facility according to the present invention is configured as follows, to attain the above object.

That is, the wind turbine power generating facility of the present invention is comprised of:
a tower erected on a foundation, a nacelle provided at the top of the tower, an electric generator installed in the nacelle, blades being connected to the electric generator and generating electric power by rotating the electric generator, and a transformer being placed on the foundation in the interior of the tower and transforming the electric power generated by the electric generator; either
wherein an iron core and a winding wire mounted on the iron core of the transformer are housed in a corrugated rib tank, and the interior of the corrugated rib tank is filled with a cooling medium thereby to absorb heat generated at the iron core and winding wire and release the heat through the corrugated rib tank, and
the facility is **characterized in that** a hood is set above the corrugated rib tank of the transformer such that air having absorbed heat from the corrugated rib tank flows into the hood, and the hood is connected to an exhaust duct which extends upward up to an upper portion of the interior of the tower to exhaust the air flowing into the hood to the upper portion of the interior of the tower; or
wherein the transformer comprises a transformer-main body in which an iron core and a winding wire mounted on the iron core are housed in a tank filled with a cooling medium, and a radiator which is connected to the tank of the transformer-main body through a pipe, so that heat generated at the iron core and winding wire is absorbed by the cooling medium and is released from the radiator through the pipe, and
the facility is **characterized in that** a hood is set above the radiator of the transformer such that air having absorbed heat released from the radiator flows into the hood, and the hood is connected to an exhaust duct which extends upward up to an upper portion of the interior of the tower to exhaust the air flowing into the hood to the upper portion of the interior of the tower.

According to the above-mentioned configuration, the air, which has a temperature increased by absorbing heat from the plurality of radiator ribs of a corrugated rib tank or a radiator, becomes low in density, becomes low in specific gravity, and moves upward from the radiator ribs of the corrugated rib tank or the radiator. The upward-moving air is collected with the hood and flows into the exhaust duct extending above the hood. The air (which has an increased temperature and becomes low in specific low) flowing into the exhaust duct and the air (which has a low temperature) outside the exhaust duct are partitioned with the exhaust duct, hence they are never mixed with each other, and the air in the exhaust duct still keeps a high temperature and the state of a low density.

Consequently, the air flowing into the exhaust duct moves upward up to the top end of the exhaust duct as if smoke goes up in a chimney, and it flows out from an outlet of the duct to the interior of the tower. The air flowing out from the duct to the interior of the tower is cooled by the forced convection of wind blowing outside of the tower and the natural convection of the atmospheric air outside of the tower through the mediation of the exterior wall of the tower. Hence the air flowing out from the duct to the interior of the tower decreases in temperature, increases in density, and the air moves down along the inner wall of the tower. The air having moved down up to the lower portion of the interior of the tower absorbs heat on the plurality of the radiator ribs of the corrugated rib tank or the radiator again, and then the air having absorbed the heat moves upward again through the hood and the exhaust duct as mentioned above. Thereby, there is produced a large circulating flow of natural convection ranging over most of the height of the tower of tens meters or more in height. The heat generated at the transformer is transferred to the exterior wall of the tower by the circulating flow and further released to the atmospheric air.

Consequently, in the tower, the exterior wall ranging in height from the top end of the exhaust duct to the foundation of the transformer serves as a heat radiating surface for releasing the heat generated at the transformer, namely heat exchange is done between the air in the tower and the atmospheric air through the most of exterior wall of the tower. Therefore, the most of the exterior wall of the tower can effectively be used for cooling of the transformer.

As a result, with reference to a temperature of the atmospheric air, it is possible to effectively control the increase of temperature of the air in the interior of the tower of the wind turbine power generating facility containing the transformer. Therefore, the temperature of the air around the transformer in the interior of the tower can be decreased effectively even when a ventilating and air-conditioning system is not installed in the interior of the tower.

Further the present invention may be provided the following arrangement optionally. That is, a cylindrical guide plate forming a double wall structure together with the exterior wall of the tower is installed inside the exterior wall of the tower to form a flow channel vertically communicating between the guide plate and the exterior wall of the tower, and a top end and a bottom end of the flow channel are opened so as to communicate with the interior of the tower. In addition, the hood may be configured to be set above the corrugated rib tank or the radiator so as to cover the upper part of a corrugated rib tank or a radiator of the transformer installed in the interior of the tower of the wind turbine power generating facility. Further the exhaust duct extending up to the upper portion of the tower may be connected to an upper part of the hood.

According to the above configuration, the heat of the air in the flow channel formed with the exterior wall and the guide plate is always absorbed by the forced convection of wind blowing outside the tower and the natural convection of the atmospheric air through the exterior wall of the tower. Further, the air is partitioned from the air inside the guide plate in the tower with the guide plate and hence is effectively cooled without being mixed with the air inside the guide plate in the tower while moving down in the flow channel.

As a result, it is possible to further control increase of the temperature of the air in the interior of the tower of the wind turbine power generating facility containing the transformer at a lower temperature level with reference to the atmospheric air. Therefore it is possible to decrease the temperature of the air around the transformer in the interior of the tower even when a ventilating air-conditioning system is not installed in the interior of the tower.

Further the present inventionmay be provided the following arrangement optionally. That is, an inner surface of the exterior wall of the tower is provided with fins. In addition, in this case, the hood also may be configured to be set above the corrugated rib tank or the radiator so as to cover the upper part of a corrugated rib tank or the radiator of the transformer installed in the interior of the tower of the wind turbine power generating facility. Further the exhaust duct extending up to the upper portion of the tower may be connected to an upper part of the hood.

According to the above configuration, it is possible to increase a heat transfer area which is to transfer the heat absorbed by the air circulating in the interior of the tower from the transformer to the exterior wall of the tower. Thereby, a temperature difference between the air in the tower and the exterior wall, namely the temperature difference between the air in the tower and the atmospheric air, can decrease. Incidentally, it is also conceivable to take on a structure of providing fins to the outer surface of the exterior wall of the tower. However, in general, the heat transfer from the exterior wall of the tower to the atmospheric air is conducted by the forced convection of wind blowing outside the tower and the natural convection of the atmospheric air. On the other hand, the heat transfer from the air in the interior of the tower to the exterior wall of the tower is conducted only by the natural convection of the circulating flow. Hence the heat transfer coefficient on the inside of the exterior wall of the tower is smaller than that on the outside of the exterior wall.

Therefore, expansion of the heat transfer area on the inner surface of the exterior wall by providing fins to the inner surface is more effective than expansion of the heat transfer area on the outer surface of the exterior wall by providing fins to the outer surface.

As a result, with reference to the atmospheric air, it is possible to further control increase of the temperature of the air in the interior of the tower of the wind turbine power generating facility containing the transformer. Therefore it is possible to decrease the temperature of the air around the transformer in the interior of the tower even when a ventilating air-conditioning system is not installed in the interior of the tower.

Further the present invention may be provided the following arrangement optionally. That is, on a condition that the hood is set above the corrugated rib tank or the radiator so as to cover the upper part of the corrugated rib tank or the radiator of the transformer installed in the interior of the tower of the wind turbine power generating facility, a fan communicating with the interior of the hood is provided to the upper part of the hood, and further the exhaust duct extending up to the upper portion of the tower is connected to the fan.

According to the above configuration, a pressure difference generated by the fan is added to another pressure difference between the air outside the exhaust duct in the tower (the air has comparatively a low temperature and a high density) and the air inside the exhaust duct ( the air has comparatively a high temperature and a low density) wherein the another pressure generates a circulating flow by natural convection, thus the air in the tower is circulated by a driving force of the two pressure differences by the fan and the natural convection. Therefore, a flow rate of the circulating air increases to the extent corresponding to the pressure difference generated by the fan.

Consequently, the flow rate of the circulating flow flowing in the vicinity of the exterior wall of the tower increases, the heat transfer coefficient of transferring heat from the circulating flow to the exterior wall of the tower increases, and the temperature difference between the air in the tower and the exterior wall, moreover the temperature difference between the air in the tower and the atmospheric air decreases.

As a result, with reference to the atmospheric air, it is possible to further control increase of the temperature of the air in the interior of the tower of the wind turbine power generating facility containing the transformer. Therefore it is possible to decrease the temperature of the air around the transformer in the interior of the tower even when a ventilating air-conditioning system is not installed in the interior of the tower. Further, the circulating flow since is driven not only by the pressure difference of the fan but also the pressure difference of natural convection caused by density difference, it is possible to attain a low output and downsizing in comparison with a case of generating air with a fan alone.

Further the present invention may be provided the following arrangement optionally. That is, on a condition that the hood is set above the corrugated rib tank or the radiator so as to cover the upper part of the corrugated rib tank or the radiator of the transformer installed in the interior of the tower of the wind turbine power generating facility, and further the exhaust duct extending up to the upper portion of the tower is connected to an upper part of the hood,
the exhaust duct for the transformer is installed differently from another exhaust duct communicating with heat generating equipment other than the transformer in the interior of the tower.

As representative heat generating equipment installed in a tower of a wind turbine power generating facility, there is a power conditioner and in general it is cooled by the forced convection of a fan.

Since the air flow by the natural convection generated at radiator ribs of a transformer is weaker than the air flow by the forced convection of the fan, if it is tried to merge the two flows with each other and flow the air with the merged flow in one identical exhaust duct, the air flow of the natural convection is hindered in a region where the two flows are merged with each other. Moreover, if the length of the exhaust duct in the downstream of the merging area has tens of meters, the forced convection by the fan prevails against the natural convection and thereby a backflow may be caused.

Consequently, if the exhaust duct for the transformer and the exhaust duct for heat generating equipment other than the transformer are merged with each other at some midpoint and integrated into one exhaust duct, the circulating flow conveying air to the exterior wall of the tower is weakened. Therefore, since the exterior wall is a place where heat generated at the transformer is released to the atmospheric air, as result of weakened circulating flow, the temperature of the air around the transformer increases in the interior of the tower.

Contrarily, according to the above mentioned configuration, the air moving upward by increased temperature of the air due to the heat generating equipment and the air moving upward by increased temperature of the air absorbing heat from the radiator ribs of the corrugated rib tank, flow thorough different exhaust ducts respectively. Therefore, a heat transfer route, which transfers the heat generated at a transformer to the exterior wall of the tower by circulating flow and releasing the heat from the exterior wall to the atmospheric air, is not influenced at all.

As a result, with reference to the atmospheric air, it is possible to further control increase of the temperature of the air in the interior of the tower of the wind turbine power generating facility containing the transformer. Therefore it is possible to decrease the temperature of the air around the transformer in the interior of the tower even when a ventilating air-conditioning system is not installed in the interior of the tower.

Further the present inventionmay be provided the following arrangement optionally. That is, a lower portion of the tower is provided with an air inlet for taking in air from the outside of the tower into the interior of the tower, and an upper portion of the tower is provided with an air outlet for discharging the air from the interior of the tower to the outside of the tower; and the interior of the tower is provided with the hood and the exhaust duct. Here, the hood is set above the corrugated rib tank of the transformer such that the air being taken in from the air inlet flows into the hood while absorbing heat released from the corrugated rib tank. The exhaust duct is connected to the hood so as to extend upward up to the upper portion of the tower and such that the air absorbing heat released from the corrugated rib tank and flowing into the hood is discharge to the interior of the tower. Further, the air outlet is configured such that the air discharged to the interior of the tower through the exhaust duct is discharged to the atmospheric air outside of the tower through the air outlet.

In the above arrangement, the corrugated rib tank may be changed to a radiator. That is, just as with the above arrangement, a lower portion of the tower is provided with an air inlet for taking in air from the outside of the tower into the interior of the tower, and an upper portion of the tower is provided with an air outlet for discharging the air from the interior of the tower to the outside of the tower; and the interior of the tower is provided with a hood and an exhaust duct. Further, the hood is set above the radiator of the transformer such that the air being taken in from the air inlet flows into the hood while absorbing heat released from the radiator. The exhaust duct is connected to the hood so as to extend upward up to the upper portion of the tower and such that the air absorbing heat released from the radiator and flowing into the hood is discharge to the interior of the tower. The air outlet is configured such that the air discharged to the interior of the tower through the exhaust duct is further discharged to the atmospheric air outside of the tower through the air outlet.

According to the above configuration, the air being taken in into the interior of the tower from the outside through the air inlet absorbs heat from the transformer and thereby becomes light in weight. After that, the air is collected with the hood, passes through the exhaust duct, and outflows from the upper opening (exhaust port) of the exhaust duct to the upper portion in the tower. And then, the air is discharged to the atmospheric air outside the tower from the upper portion of the tower through the air outlet.

Consequently, even when the transformer , which releases heat to outside of the tower through the corrugated rib tank or the radiator, is contained in the interior of the tower , not only it is possible to decrease the temperature of air around the transformer in the tower without installing a ventilating air-conditioning system in the interior of the tower but also, the outside air always having a low temperature is supplied as the air being taken in through the air inlet to the interior of the tower and can cool the transformer. Therefore the cooling performance of the transformer further can be improved.

### [Effect of the Invention]

The present invention makes it possible to obtain a wind turbine power generating facility capable of decreasing the temperature of air around a transformer in the interior of a tower of the facility without installing a ventilating air-conditioning system in the interior of the tower even in the case of that the interior of the tower is provided with the transformer being configured to release heat to the outside through a corrugated rib tank or a radiator.

### [Brief Description of the Drawings]

Fig. 1 is a longitudinal sectional side view showing a first embodiment of a wind turbine power generating facility according to the present invention.
Fig. 2 is a longitudinal sectional side view showing a transformer of a corrugated rib tank type employed in the wind turbine power generating facility of Fig. 1.
Fig. 3 is a transverse sectional plan view of Fig. 2.
Fig. 4 is a longitudinal sectional side view showing a transformer of a radiator type employed in the wind turbine power generating facility of Fig. 1.
Fig. 5 is a transverse sectional plan view of Fig. 4.
Fig. 6 is a longitudinal sectional side view showing a second embodiment of a wind turbine power generating facility according to the present invention.
Fig. 7 is a longitudinal sectional side view showing a third embodiment of a wind turbine power generating facility according to the present invention.
Fig. 8 is a sectional view taken on line A-A in Fig. 7.
Fig. 9 is a longitudinal sectional side view showing a fourth embodiment of a wind turbine power generating facility according to the present invention.
Fig. 10 is a longitudinal sectional side view showing a fifth embodiment of a wind turbine power generating facility according to the present invention.
Fig. 11 is a longitudinal sectional side view showing a sixth embodiment of a wind turbine power generating facility according to the present invention.
Fig. 12 is a longitudinal sectional side view showing a seventh embodiment of a wind turbine power generating facility according to the present invention.
Fig. 13 is a longitudinal sectional side view showing an eighth embodiment of a wind turbine power generating facility according to the present invention.
Fig. 14 is a longitudinal sectional side view showing a ninth embodiment of a wind turbine power generating facility according to the present invention.
Fig. 15 is a longitudinal sectional side view showing a tenth embodiment of a wind turbine power generating facility according to the present invention.

### [Embodiment for Carrying Out the Invention]

Embodiments of a wind turbine power generating facility according to the present invention are hereunder explained in detail in reference to drawings.

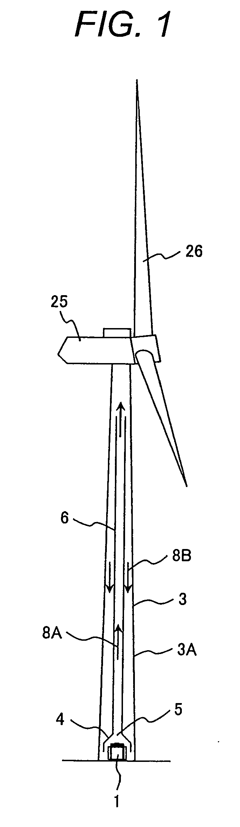

A first embodiment of a wind turbine power generating facility according to the present invention is shown in Figs. 1, 2, and 3. As shown in these figures, the wind turbine power generating facility according to the present embodiment mainly includes a tower 3 erected on a foundation, a nacelle 25 provided at the top of the tower 3, an electric generator (not shown in the figures) installed in the nacelle 25, blades 26 being connected to the electric generator and generating electric power by rotating the electric generator, and a transformer 1 being placed on the foundation in the interior of the tower 3 and transforming the electric power generated at the electric generator.

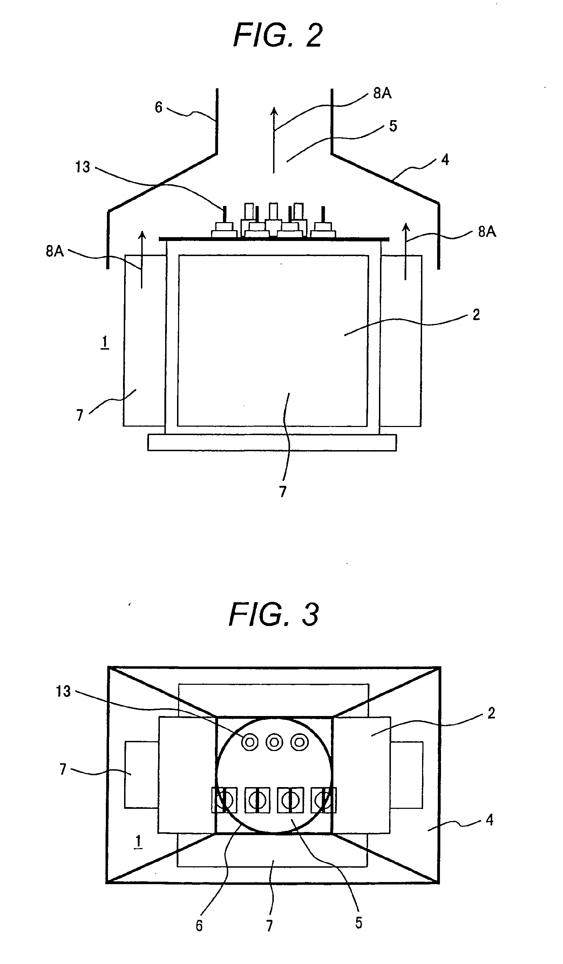

In the transformer 1 on the foundation in the interior of the tower 3, as shown in Figs. 2 and 3, an iron core (not shown in the figures) and an excitation winding wire (not shown in the figures) mounted on the iron core are housed in a corrugated rib tank 2, and the corrugated rib tank 2 is filled with an insulating cooling medium (not shown in the figures) such as a mineral oil. Thereby, the heat generated at the iron core and the winding wire is absorbed with the cooling medium and released in the interior of the tower 3 through the corrugated rib tank 2. Here, the reference numeral 13 represents bushings.

In the present embodiment, a hood 4 is set above the corrugated rib tank 2 of the transformer 1 so as to cover an upper part of the corrugated rib tank 2 and such that air having absorbed heat from the corrugated rib tank 2 flows into the hood 4. Further, the hood 4 is provided an outlet 5 with which an exhaust duct 6 is connected. The exhaust duct 6 is formed in a cylindrical shape so as to extend up to an upper portion of the tower 3 in the interior of the tower 3. Thereby, the air having flown into the hood 4 absorbs the heat released from the corrugated rib tank 2, and then the air is exhausted through the exhaust duct 6 to the interior of the tower.

According to the present embodiment, the air 8A having a temperature increased by absorbing heat from a plurality of radiator ribs 7 of the corrugated rib tank 2 becomes low in density and moves upward from the radiator ribs 7 of the corrugated rib tank 2. The upward-moving air 8A is collected with the hood 4 and flows into the exhaust duct 6 extending above the hood 4. The air 8A (which has an increased temperature and becomes low in specific gravity and is flowing into the exhaust duct 6m) and the air 8B (which has a low temperature) outside the exhaust duct 6 are partitioned with the exhaust duct 6, hence the air 8A and the air 8B are never mixed with each other, and the air 8A in the exhaust duct 6 keeps a high temperature and a state of a low density.

Consequently, the air 8A flowing into the exhaust duct 6 moves up to the top end of the exhaust duct 6 as if smoke goes up in a chimney, and flows out from an outlet of the duct to the interior of the tower 3. The air 8B flowing out to the interior of the tower 3 is cooled by the forced convection of wind blowing outside of the tower 3 and the natural convection of the atmospheric air outside of the tower 3 through the mediation of the exterior wall 3A of the tower 3, hence the air flowing out from the duct 6 to the interior of the tower decrease in temperature, increase in density, and the air 8B moves down along an inner surface of the exterior wall 3A of the tower 3. The air 8B having moved down up to the lower portion of the tower absorbs heat on a plurality of radiator ribs 7 of the corrugated rib tank 2 again, and then the air having absorbed the heat moves upward again through the hood 4 and the exhaust duct 6 as mentioned above. Thereby, there is produced a large circulating flow of natural convection ranging over most of the height of the tower 3 of tens meters or more in height.

The heat generated at the transformer 1 is transferred to the exterior wall 3A of the tower 3 by the circulating flow and then released to the atmospheric air. Consequently, in the tower, the exterior wall portion ranging in height from the top end of the exhaust duct 6 to the foundation of the transformer 1 serves as a heat transferringportion for releasing the heat generated at the transformer 1, namely heat exchange is done between the air in the tower 3 and the atmospheric air through the most of the exterior wall 3A of the tower 3. Therefore, the most of the exterior wall of the tower can effectively be used for cooling of the transformer.

As a result, with reference to a temperature of the atmospheric air, it is possible to effectively control the increase of temperature of the air in the interior of the tower 3 of the wind turbine power generating facility containing the transformer 1.

In the present embodiment, although the cross-sectional shape of the flow channel of the exhaust duct 6 is round, the shape is not necessarily round and a shape, such as an elliptical shape or a rectangular shape, which can effectively use the space in the tower, can be selected. Further, it since becomes possible to increase the quantity of the circulation in the tower by keeping the temperature of the air 8A in the exhaust duct 6 as higher as possible, the material of the exhaust duct 6 is preferably made of a material having a low thermal conductivity, namely plastics or cloth rather than a metal, and yet preferably a heat insulating material.

Meanwhile, as a means for transferring heat not through air in a tower 3 but directly from a transformer 1 to the exterior wall of the tower 3, there is radiation. If a transferred heat quantity can be increased by the radiation, the temperature of the air in the tower 3 can be further decreased. Hence, it is an effective means to increase the emissivity of an outer surface of the transformer 1 and the inner surface of the exterior wall 3A of the tower 3. Such a means can be realized easily by coating the surfaces facing between the outer surface of the transformer 1 and the inner surface of exterior wall 3A with a paint having a high emissivity, for example a black body paint.

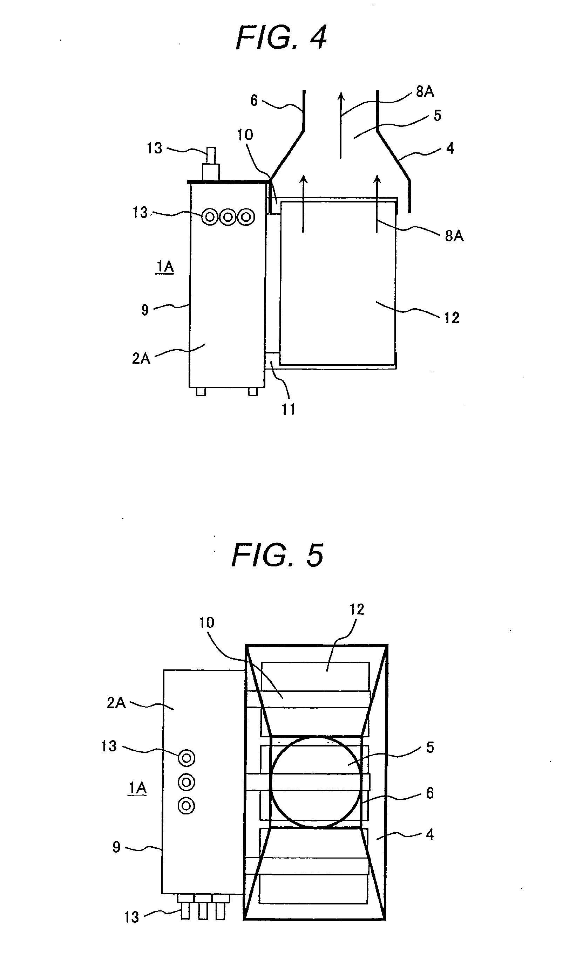

Next, explained is done about an example in a case of adopting a radiator type transformer in place of the corrugated rib tank type transformer described above in reference to Figs. 4 and 5.

A transformer 1A of a radiator type shown in Figs. 4 and 5 is comprised of:
a transformer main body 9 which is configured by an iron core (not shown in the figures), an excitation winding wire (not shown in the figures) mounted on the iron core, and a tank 2A as a sealed container which is filled with an insulative cooling medium such as a mineral oil and contains the iron core and the exciting winding wire; and
a self-cooling type radiator 12 which is connected to the tank 2A of the transformer main body 9 through an upper pipe 10 anda lowerpipe 11. The self-cooling type radiator 12 absorbs heat of the insulative cooling medium circulating between the tank 2A and the radiator 12 through the upper pipe 10 and the lower pipe 11 by self-cooling without a power source. As representative examples of the self-cooling type radiator 12, there are exampled such a natural air cooling type radiator and heat pipe type radiator.

The transformer 1A is placed in the interior of a tower 3 of a wind turbine power generating facility. A hood 4 is set above the self-cooling type radiator 12 so as to cover an upper portion of the self-cooling type radiator 12. The hood 4 is connected to a cylindrical exhaust duct 6 at an outlet 5 of the hood 4. The exhaust duct 6 extends upward up to an upper portion of the interior of the tower 3 to exhaust the air flowing into the hood 4 to the upper portion of the interior of the tower 3.

When such a radiator type transformer 1A is adopted with the hood 4 and the exhaust duct 6, a phenomenon (a large circulating flow of natural convection ranging over most of the height of the tower) similar to that of the above-mentioned corrugated rib tank type transformer appears in the interior of the tower and hence effects similar to those of the above-mentioned corrugated rib tank type transformer are obtained. Further, since the hood 4 and the exhaust duct 6 are set only above the self-cooling type radiator 12 to which components such as bushings 13 are not attached, a structure of the facility can be simplified. Furthermore, since the self-cooling type radiator 12 does not have a high voltage section, the effect of ensuring a high degree of safety during operation including maintenance and inspection is also obtained.

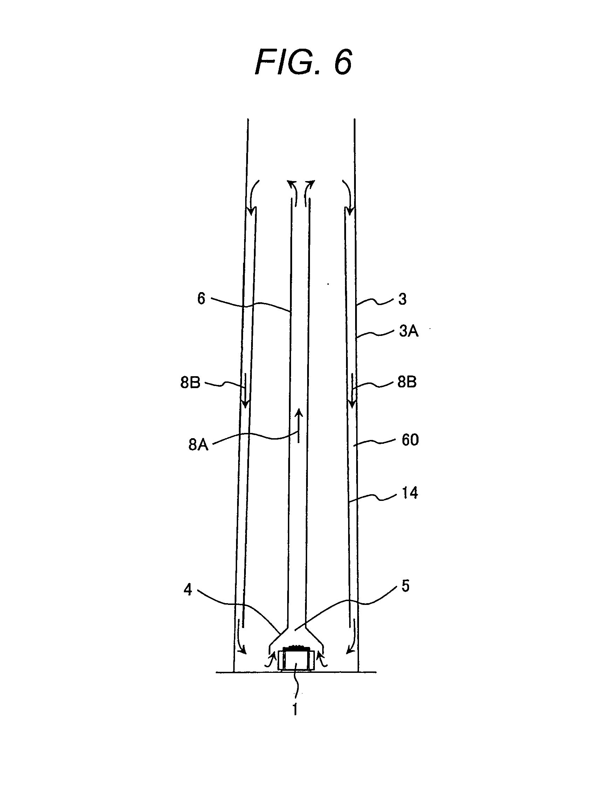

Fig. 6 shows a second embodiment of a wind turbine power generating facility according to the present invention. Here, symbols identical to symbols shown in Fig. 1 indicate identical constituent members respectively and hence their detailed explanations are omitted.

In the present embodiment shown in Fig. 6, the configuration different from that of the first embodiment (Fig. 1) is that a cylindrical guide plate 14 is installed inside the exterior wall 3A of the tower 3 so as to form a double wall structure together with the exterior wall of the tower 3 and thereby forms a flow channel 60 communicating vertically between the guide plate 14 and the exterior wall 3A of the tower 3. A top end of the flow channel 3A has nearly the same level as the top end of the exhaust duct 6 in height, and a bottom end of the flow channel 3A has the same level as a transformer 1 in height, and both of the ends are opened so as to communicate with the interior of the tower 3.

According to the present embodiment, in addition to obtaining the effects similar to the first embodiment, the heat of the air 8B moving down in the flow channel 60 between the exterior wall 3A of the tower 3 and the guide plate 14 is effectively absorbed by the forced convection of wind blowing outside and the natural convection of the atmospheric air through the mediation of the exterior wall 3A of the tower 3. Furthermore, since the air 8B is separated from the air inside the guide plate 14 in the tower 3 with the guide plate 14, the air 8B can be cooled effectively without being mixed with the air inside the guide plate 14 in the tower 3 and the temperature of the air around the transformer 1 in the interior of the tower 3 can be further decreased.

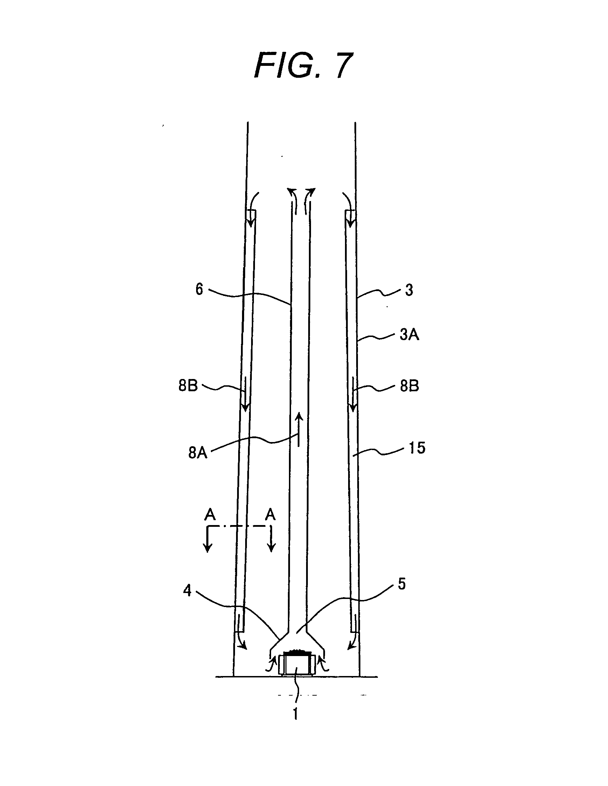

Fig. 7 shows a third embodiment of a wind turbine power generating facility according to the present invention. Here, symbols identical to symbols shown in Fig. 1 indicate identical constituent members and hence their detailed explanations are omitted.

In the present embodiment shown in Fig. 7, the configuration different from that of the first embodiment (Fig. 1) is that an inner surface of the exterior wall 3A of the tower 3 is provided with fins 15 ranging from in the vicinity of the transformer 1 to in the vicinity of the top end of the exhaust duct 6.

According to the present embodiment, in addition to obtaining the effects similar to the first embodiment, it is possible to increase a heat transfer area which is to transfer the heat absorbed by the air circulating in the interior of the tower 3 from the transformer 1 to the exterior wall 3A of the tower 3. Thereby, a temperature difference between the air in the tower 3 and the exterior wall 3A, namely the temperature difference between the air in the tower 3 and the atmospheric air, can decrease, and the temperature of the air in the interior of the tower 3 can be further decreased.

Incidentally, it is also conceivable to take on a structure of providing fins to the outer surface of the exterior wall 3A of the tower 3. However expansion of the heat transfer area on the inner surface of the exterior wall by providing fins to the inner surface is more effective than expansion of the heat transfer area on the outer surface of the exterior wall by providing fins to the outer surface. Because the heat transfer 3A from the exterior wall of the tower 3 to the atmospheric air is conducted by the forced convection of wind blowing outside the tower 3 and the natural convection of the atmospheric air, on the other hand, the heat transfer from the air in the interior of the tower 3 to the exterior wall 3A of the tower 3 is conducted only by the natural convection of the circulating flow. Hence the heat transfer coefficient on the inside of the exterior wall 3A of the tower 3 is since smaller than that on the outside of the exterior wall, it is more effective to make up for smaller heat transfer coefficient on the inside of the exterior wall of the tower with fins.

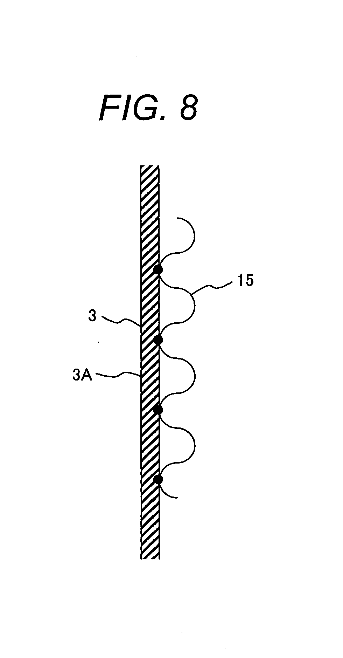

Fig. 8 shows an example of the fins 15 in Fig. 7. As fins 15 for expanding a heat transfer area, straight shaped-fins although are used frequently, in place of them, as shown in the example of Fig, 8, it is possible to take on a fin structure which is formed by the working of a thin plate used as the guide plate 14 into a corrugated shape used as fins 15 and by welding valleys of the corrugated-thin plate on the inner surface of the exterior wall 3A of the tower 3 in the present embodiment.

According to the present embodiment, in addition to the expansion of the heat transfer area as the fins 15, the space between the exterior wall 3A of the tower 3 and the fins 15 functions as the flow channel in the vertical direction communicating with the interior of the tower 3. Thereby, the fins 15 can also play the role of the guide plate 14. Consequently, it is possible to improve the cooling performance in comparison with straight shaped-fins and further decrease the temperature of the air around the transformer 1 in the interior of the tower 3.

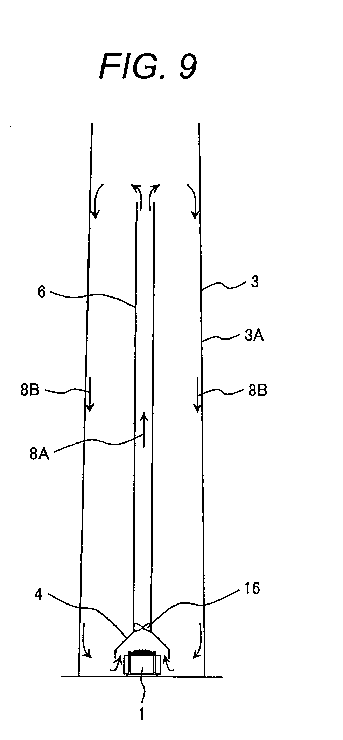

Fig. 9 shows a fourth embodiment of a wind turbine power generating facility according to the present invention. Here, symbols identical to symbols shown in Fig. 1 indicate identical constituent members and hence repetitive detailed explanations are omitted.

The configuration in the present embodiment shown in the Fig. 9 different from that in the first embodiment (Fig. 1) is that a fan 16 is provided between the hood 4 and the exhaust duct 6 (it is also possible to install a fan 16 in the exhaust duct 6).

According to the present embodiment, in addition to obtaining the effects similar to the first embodiment, the following effect is obtained. That is, a pressure difference generated by the fan 16 is added to another pressure difference between the air 8B outside the exhaust duct 6 in the tower (the air 8B has comparatively a low temperature and a high density) and the air 8A inside the exhaust duct ( the air 8A has comparatively a high temperature and a low density) wherein the another pressure generates a circulating flow by natural convection, thus the air in the tower 3 is circulated by a driving force of the two pressure differences by the fan 16 and the natural convection. Therefore, a flow rate of the circulating air increases to the extent corresponding to the pressure difference generated by the fan 16.

Consequently, the flow rate of the circulating flow flowing in the vicinity of the exterior wall 3A of the tower 3 increases, the heat transfer coefficient of transferring heat from the circulating flow to the exterior wall 3A of the tower 3 increases, the temperature difference between the air in the tower 3 and the exterior wall 3A, moreover the temperature difference between the air in the tower 3 and the atmospheric air decreases, and the temperature of the air in the interior of the tower 3 can be further decreased. Further, the circulating flow since is driven not only by the pressure difference of the fan but also the pressure difference of natural convection caused by density difference, it is possible to attain a low output and downsizing in comparison with a case of generating air with a fan 16 alone.

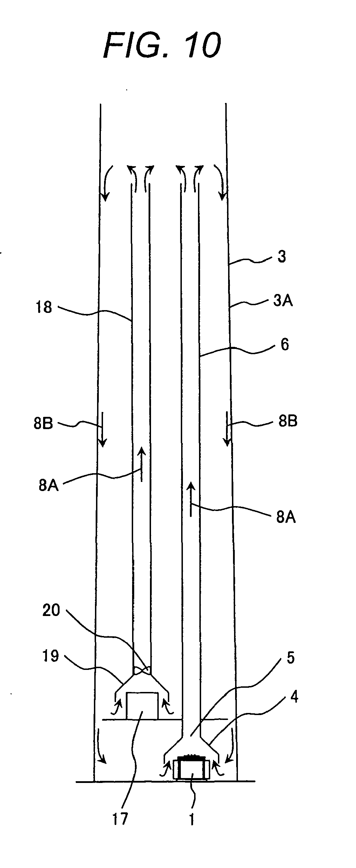

Fig. 10 shows a fifth embodiment of a wind turbine power generating facility according to the present invention. Here, symbols identical to symbols shown in Fig. 1 indicate identical constituent members and hence repetitive detailed explanations are omitted.

In the present embodiment shown in Fig. 10, the hood 4 is set above the corrugated the rib tank 2 of the transformer 1 in the interior of the tower 3 of the wind turbine power generating facility so as to cover the tank 2; the exhaust duct 6 is connected to the upper part of the hood 4 so as to extend upward up to the upper portion of the tower 3; and the tower 3 is provided with another hood 19 for covering heat generating equipment 17 other than the transform 1 and another exhaust duct 18 connected to the hood 19 so as to extend upward up to upper portion of the tower 3.

As represent heat generating equipment 17 in the tower 3 of the wind turbine power generating facility, exampled is a power conditioner, and in general, the power conditioner is cooled by the forced convection of a fan 20 provided between the hood 19 and the exhaust duct 18. Since the air flow by the natural convection generated at radiator ribs 7 of a transformer 1 is weaker than the air flow by the forced convection of the fan 20, if it is tried to merge the two flows with each other and flow the air with the merged flow in one identical exhaust duct, the air flow of the natural convection is hindered in a region where the two flows are merged with each other. Moreover, if the length of the exhaust duct in the downstream of the merging area has tens of meters, the forced convection by the fan 20 prevails against the natural convection and thereby a backflow may be caused. Consequently, if the exhaust duct 6 for the transformer 1 and the exhaust duct 18 for the heat generating equipment 17 other than the transformer are merged with each other at some midpoint and integrated into one exhaust duct, the circulating flow conveying air to the exterior wall 3A of the tower 3 is weakened. Therefore, since the exterior wall 3A is a place where heat generated at the transformer 1 is released to the atmospheric air, as result of weakened circulating flow, the temperature of the air around the transformer 1 increases in the interior of the tower 3.

Contrarily, according to the above mentioned configuration of the present embodiment, the air 8A moving upward by increased temperature of the air due to the heat generating equipment 17 and the air 8A moving upward by increased temperature of the air absorbing heat from the radiator ribs 7 of the corrugated rib tank 2, flow thorough different exhaust ducts 6 and 18 respectively. Therefore, a heat transfer route, which transfers the heat generated at a transformer 1 to the exterior wall of the tower 3 by circulating flow and releasing the heat from the exterior wall to the atmospheric air, is not influenced at all even when the two flows of the air 3A and the air 3B is produced. Consequently, obtained can be effects similar to the first embodiment.

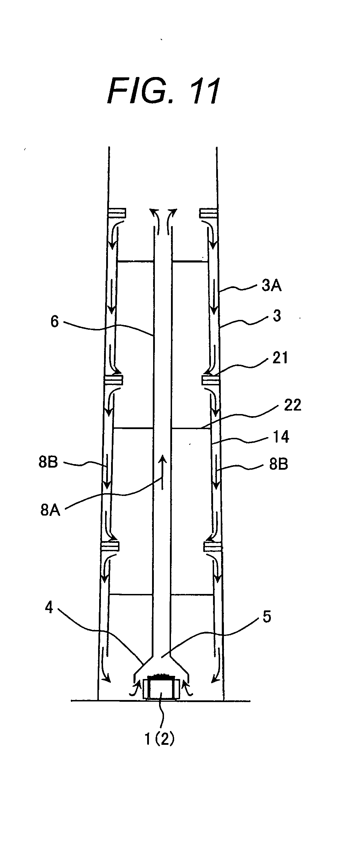

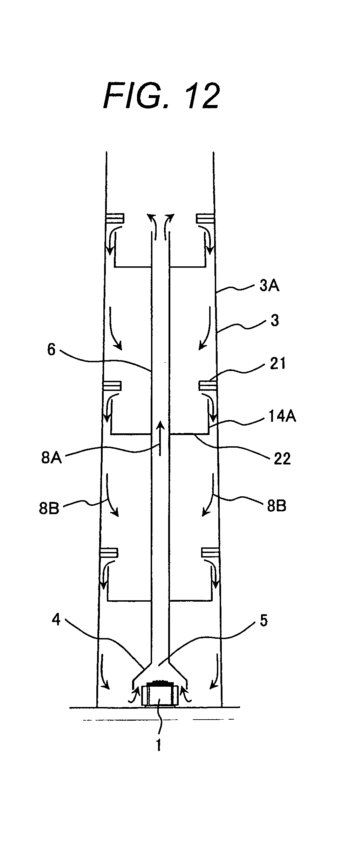

Figs. 11 and 12 are views showing sixth and seventh embodiments of a wind turbine power generating facility according to the present invention respectively and are modified examples of the second embodiment shown in Fig. 6. Here, symbols identical to symbols shown in Fig. 1 indicate identical constituent members and hence repetitive detailed explanations are omitted.

As shown in Figs. 11 and 12, the tower 3 in each of the embodiments is actually divided vertically into a plurality of blocks, and each block is provided with flanges 21 being protruded inward at the top end and the bottom end of the block. The tower 3 tens of meters or more in height is assembled by joining the blocks by tightening the flanges 21 at the top end and the bottom end of each block.

In such a configuration, if there is no consideration for the flanges, since the flanges 21 protrude inward respectively, the flow of the air 8B moving down along the inner surface of the exterior wall of the tower 3 is directed away from the exterior wall of the tower 3 at the tightening parts and thereby the air 8B may be ineffectively cooled.

In the sixth embodiment shown in Fig. 11, in order to improve the above drawback and forcibly let the air 8B flow along the exterior wall of the tower 3, a guide plate 14 is provided between the flanges 21 of each block, and an inside of the guide plate 14 is provided with footholds 22 respectively for inspecting each flange 21 so as to block an air flow space inside the guide plate 14 with the footholds 22.

According to the above configuration of the present embodiment, the air 8B moving down in the tower 3 can flow outside the guide plate 14, the air flow along the inner surface of the exterior wall 3A of the tower 3 can be formed even when providing the flange 21, and the air 8B canbe cooled effectively.

A seventh embodiment shown in Fig. 12 is a modified example of the sixth embodiment shown in Fig. 11 and is an example of providing a guide plate 14A only between each foothold 22 and each flange 21.

Even when adopting such a configuration too, the flow of the moving down-air 8B being directed away from the exterior wall 3A of the tower 3 with the flange 21 can forcibly be returned to the flow along the inner surface of the exterior wall 3A. Hence it is possible to effectively cool the air 8B while the effect may be somewhat less than the case of the sixth embodiment shown in Fig. 11.

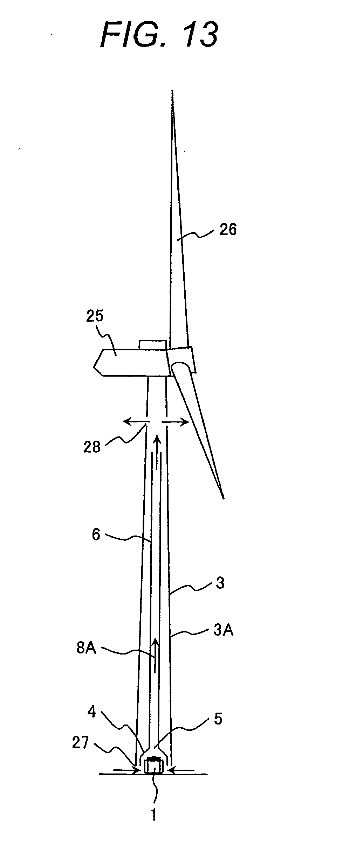

Fig. 13 shows an eighth embodiment of a wind turbine power generating facility according to the present invention. Here, symbols identical to symbols shown in Fig. 1 indicate identical constituent members and hence repetitive detailed explanations are omitted.

The present embodiment shown in the Fig. 13 is the case that a lower portion of the tower 3 of the wind turbine power generating facility is provided with an air inlet 27 for taking in air into the interior of the tower 3, and an upper portion of the tower 3 is provided an air outlet 28 for discharging the air from the interior of the tower 3 to the atmospheric air outside the tower in the vicinity of an upper opening (exhaust port) of the exhaust duct 6.

According to the present embodiment, the air being taken in into the interior of the tower 3 from the outside through the air inlet 17 absorbs heat from the transformer 1 and thereby becomes light in weight. After that, the air is collected with a hood 4, passes through the exhaust duct 6, and outflows from the upper opening (exhaust port) of the exhaust duct 6 to the upper portion in the tower 3. And then, the air is discharged to the atmospheric air outside the tower 3 from the upper portion of the tower 3 through the air outlet 28.

Consequently, according to those embodiments, even when the transformer 1, which releases heat to outside of the tower through the corrugated rib tank or the radiator, is contained in the interior of the tower 3, not only it is possible to decrease the temperature of air around the transformer 1 in the tower 3 without installing a ventilating air-conditioning system in the interior of the tower 3 but also, in the present embodiment, the outside air always having a low temperature is supplied as the air being taken in through the air inlet 27 to the interior of the tower 3 and can cool the transformer 1, and hence the coolingperformance of the transformer 1 further canbe improved.

Here, in the present embodiment, it is preferable to form multiple air inlets 27 and multiple air outlets 28 in a circumferential direction of the tower 3 so as not to be influenced by the direction where wind blows.

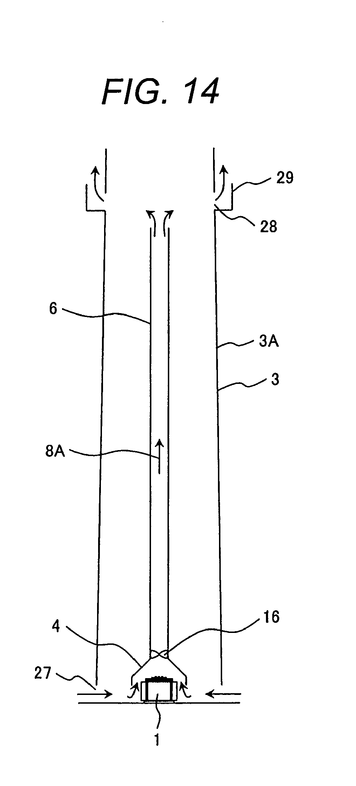

Fig. 14 shows a ninth embodiment of a wind turbine power generating facility according to the present invention and is a modified example of the eighth embodiment shown in Fig. 13. Here, symbols identical to symbols shown in Fig. 1 indicate identical constituent members and hence repetitive detailed explanations are omitted.

The difference in the present embodiment from the eighth embodiment shown in Fig. 13 is that a fan 16 is provided between the hood 4 and the exhaust duct 6 (it is also possible to install a fan 16 in the exhaust duct 6).

In the present embodiment, since forcible flow by the fan 16 is added to the flow of the air 8A generated only by natural convection in the eighth embodiment shown in Fig. 13, the quantity of air flowing around a transformer 1 increases and the flow rate of the air also increases. As a result, the heat transfer coefficient of transferring heat from the transformer 1 to the air increases and the cooling performance of the transformer 1 can improve further than the case of the eighth embodiment shown in Fig. 13.

Further, in the present embodiment, the outside of the air outlet 28 is provided with windbreak plates 29 in the circumferential direction of the tower 3 so as not to be influenced by the direction where wind blows to prevent wind from blowing into those air outlets 28.

Since wind from outside of the tower 3 intrinsically blows into the tower through the air inlet 27, there is no need for the air inlet 27 to provide a windbreakplate 29. Contrarily, in the case of the air outlet 28, if it receives a head wing, it is hindered from discharging in the atmospheric air toward outside of the tower 3 resulting in the quantity of air flowing around a transformer 1 being reduced by the influence of the head wind, and cooling performance deteriorates.

On the other hand, the present embodiment since is provided with the windbreak plate 29 at the outside of the air outlet 28 so as to prevent wind from blowing into the tower through the air outlet 28, the windbreak plate 29 can block the head wind and assist the air 8A to be discharged from the interior of the tower 3 to the atmospheric air outside the tower 3. Hence, it is possible to prevent the quantity of air flowing around the transformer 1 from reducing and deteriorating the cooling performance.

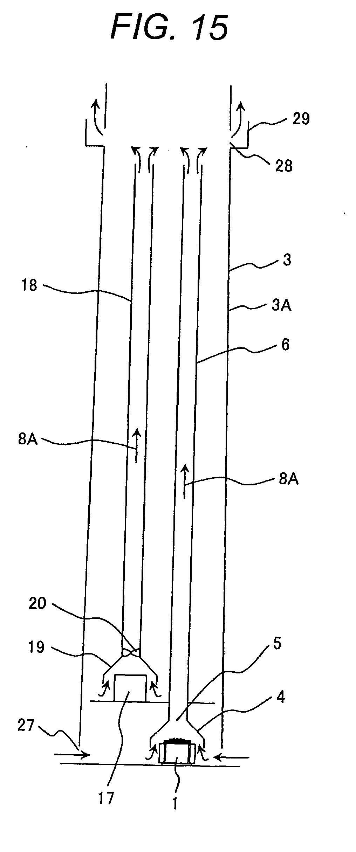

Fig. 15 shows a tenth embodiment of a wind turbine power generating facility according to the present invention and is a modified example of the ninth embodiment shown in Fig. 14. Here, symbols identical to symbols shown in Fig. 1 indicate identical constituent members and hence repetitive detailed explanations are omitted.

The present embodiment shown in Fig. 14 is the case where the heat generating equipment 17 other than the transformer 1 is installed inside the tower 3 and in such a case the exhaust duct 6 for the transformer 1 and the exhaust duct 18 for the heat generating equipment 17 are provided separately. Other configuration is the same as the ninth embodiment shown in Fig. 14.

In the present embodiment stated above, regarding the air 8A moving upward having a high temperature caused by the heat generating equipment 17, and regarding another air 8A moving upward having a high temperature by absorbing the heat from plural radiator ribs 7 of the corrugated rib tank 2, they flow through the exhaust ducts 6 and 18 separately. Therefore, the route of releasing heat generated at the transformer 1 from the air outlet 28 to the atmospheric air is not influenced at all by the two air flows. Consequently, the effects similar to the ninth embodiment can be obtained.

As described above, in the wind turbine power generating facility according to the present invention, since a large circulating flow of natural convection ranging over the large part of the height of the tower tens of meters or more in height is formed in the tower and heat generated at the transformer is released from the air in the tower to the atmospheric air by using the large part of the exterior wall of the tower as the heat transfer surface, the temperature of the air around the transformer in the interior of the tower can be decreased even though a ventilating air-conditioning system is not provided in the interior of the tower and the applicability of the present invention is substantial.

## Claims

1. A wind turbine power generating facility comprising
a tower (3) erected on a foundation,
a nacelle (25) provided at the top of the tower (3),
an electric generator installed in the nacelle (25),
blades (26) being connected to the electric generator and generating electric power by rotating the electric generator, and
a transformer (1; 1A) being placed on the foundation in an interior of the tower (3) and transforming the electric power generated by the electric generator,
wherein an iron core and a winding wire mounted on the iron core of the transformer are housed in a tank, and the interior of the tank is filled with a cooling medium thereby to absorb heat generated at the iron core and winding wire and release the heat, and
the facility is **characterized in that**
a hood (4) is set above the transformer (1; 1A) such that air having absorbed heat from the transformer (1; 1A) flows into the hood (4), and the hood (4) is connected to an exhaust duct (6) which extends upward up to an upper portion of the interior of the tower (3) to exhaust the air flowing into the hood (4) to the upper portion of the interior of the tower (3).

2. A wind turbine power generating facility according to Claim 1, the transformer (1; 1A) is a corrugated rib type transformer,
wherein the iron core and the winding wire are housed in a corrugated rib tank (2) of the transformer (1), and the interior of the corrugated rib tank (2) is filled with the cooling medium thereby to absorb heat generated at the Iron core and winding wire and release the heat through the corrugated rib tank (2), and
the hood (4) is set above the corrugated rib tank (2) of the transformer (1; 1A) such that air having absorbed heat from the corrugated rib tank (2) flows into the hood (4).

3. A wind turbine power generating facility according to Claim 1, the transformer (1, 1A) is a radiator type transformer,
wherein the transformer (1; 1A) comprises a transformer-main body (9) in which the iron core and the winding wire are housed in the tank filled with the cooling medium, and a radiator (12) which is connected to the tank of the transformer-main body (9) through a pipe (10), so that heat generated at the iron core and winding wire is absorbed by the cooling medium and is released from the radiator (12) through the pipe (10), and
the hood (4) is set above the radiator (12) of the transformer (1; 1A) such that air having absorbed heat released from the radiator (12) flows into the hood (4).

4. A wind turbine power generating facility according to Claim 2 or 3,
wherein at least the upper part of the corrugated rib tank (2) or the radiator (12) is covered with the hood (4).

5. A wind turbine power generating facility according to any one of Claims 1 to 3,
wherein the exhaust duct (6) extends upward up to the upper portion of the tower (3) and the cross-sectional shape thereof is round, elliptic, or rectangular.

6. A wind turbine power generating facility according to any one of Claims 1 to 5,
wherein a cylindrical guide plate (14) forming a double wall structure together with an exterior wall (3A) of the tower (3) is installed inside the exterior wall (3A) of the tower (3) to form a flow channel vertically communicating between the guide plate (14) and the exterior wall (3A) of the tower (3), and a top end and a bottom end of the flow channel are opened so as to communicate with the interior of the tower (3).

7. A wind turbine power generating facility according to Claims 1 to 5,
wherein surfaces facing each other of the tower (3) and the transformer (1; 1A) are coated with a paint having a high emissivity.

8. A wind turbine power generating facility according to any one of Claims 1 to 7.
wherein an inner surface of the exterior wall (3A) of the tower (3A) is provided with fins (15).

9. A wind turbine power generating facility according to any one of Claims 1 to 8,
wherein a fan (16) Is installed inside the exhaust duct (6) or between the exhaust duct (6) and the hood (4).

10. A wind turbine power generating facility according to anyone of Claims 1 to 9,
wherein the exhaust duct (6) for the transformer (1; 1A) is installed differently from another exhaust duct communicating with heat generating equipment other than the transformer (1; 1A) in the interior of the tower (3).

11. A wind turbine power generating facility according to any one of Claims 1 to 9,
wherein the tower (3) is vertically divided into a plurality of blocks, and each block is provided with flanges (21) being protruded inward at the top end and the bottom end of the block,
wherein the tower (3) is assembled by joining the blocks to each other by tightening the flanges (21) each between the blocks at the top end and the bottom end, and
wherein cylindrical guide plates (14) are installed between the flanges (21) of the blocks, and an inside of the guide plate (14) is provided with a foothold (22) for inspecting the flanges (21) such that air does not flow inside the guide plates (14) by blocking air flow space with the foothold (22).

12. A wind turbine power generating facility according to any one of Claims 1 to 11,
wherein the tower (3) is vertically divided into a plurality of blocks, and each block Is provided with flanges (21) being protruded inward at the top end and the bottom end of the block,
wherein the tower (3) is assembled by joining the blocks to each other by tightening the flanges (21) each between the blocks at the top end and the bottom end, and
wherein each of the blocks is provided a cylindrical guide plate (14) only between the flange (21) and a foothold (22) for inspecting the flange (21) such that an air flow channel is formed between the guide plate (14) and the exterior tower.

13. A wind turbine power generating facility according to Claim 2,
wherein the iron core and the winding wire are housed in a corrugated rib tank (2) of the transformer (1; 1A), and the Interior of the corrugated rib tank (2) is filled with the cooling medium thereby to absorb heat generated at the iron core and winding wire and release the heat through the corrugated rib tank (2), and
a lower portion of the tower (3) is provided with an air inlet (27) for taking in air from the outside of the tower (3) into the interior of the tower (3), and an upper portion of the tower (3) is provided with an air outlet (28) for discharging the air from the interior of the tower (3) to the outside of the tower (3); and
wherein the hood (4) is set above the corrugated rib tank (2) of the transformer (1; 1A) such that the air being taken in from the air inlet (27) flows into the hood (4) while absorbing heat released from the corrugated rib tank (2), and
wherein the exhaust duct (6) is connected to the hood (4) so as to extend upward up to the upper portion of the tower (3) and such that the air absorbing heat released from the corrugated rib tank (2) and flowing into the hood (4) is discharge to the interior of the tower (3), and
wherein the air outlet (28) is configured such that the air discharged to the interior of the tower (3) through the exhaust duct (6) is further discharged to the atmospheric air outside of the tower (3) through the air outlet (28).

14. A wind turbine power generating facility according to Claim 3,
wherein the transformer (1; 1A) comprises a transformer-main body (9) in which the iron core and the winding wire are housed in the tank filled with the cooling medium, and a radiator (12) which is connected to the tank of the transformer-main body (9) through a pipe (10), so that heat generated at the iron core and winding wire is absorbed by the cooling medium and is released from the radiator (12) through the pipe (10), and
a lower portion of the tower (3) Is provided with an air inlet (27) for taking in air from the outside of the tower (3) into the interior of the tower (3), and an upper portion of the tower (3) is provided with an air outlet (28) for discharging the air from the interior of the tower (3) to the outside of the tower (3); and
wherein the hood (4) is set above the radiator (12) of the transformer (1;1A) such that the air being taken in from the air inlet flows into the hood (4) while absorbing heat released from the radiator (12), and
wherein the exhaust duct (6) is connected to the hood (4) so as to extend upward up to the upper portion of the tower (3) and such that the air absorbing heat released from the radiator (12) and flowing into the hood (4) is discharge to the interior of the tower (3), and
wherein the air outlet (28) is configured such that the air discharged to the interior of the tower (3) through the exhaust duct (6) is further discharged to the atmospheric air outside of the tower (3) through the air outlet (28).

15. A wind turbine power generating facility according to Claim 13 or 14,
wherein the air outlet (28) is provided at the upper portion of the tower (3) in the vicinity of an upper opening of the exhaust duct (6).

16. A wind turbine power generating facility according to any one of Claims 13 to 15,
wherein the exhaust duct (6) for the transformer (1;1A) is installed differently from another exhaust duct communicating with heat generating equipment other than the transformer (1;1A) in the interior of the tower (3).

17. A wind turbine power generating facility according to any one of Claims 13 to 16,
wherein a fan (16) is installed inside the exhaust duct (6) or between the exhaust duct (6) and the hood (4),

18. A wind turbine power generating facility according to any one of Claims 13 to 17,
wherein the outside of the tower (3) in the vicinity of the air outlet (28) is provided with a windbreak plate (29) to prevent wind outside the tower (3) from blowing into the tower (3) through the air outlet (28).

## Patentansprüche

1. Anlage zum Erzeugen von Windturbinenleistung, die Folgendes umfasst:
einen Turm (3), der auf einem Fundament errichtet ist,
eine Gondel (25), die oben auf dem Turm (3) vorgesehen ist,
einen elektrischen Generator, der in der Gondel (25) installiert ist,
Flügel (26), die mit dem elektrischen Generator verbunden sind und durch Drehen des elektrischen Generators elektrische Leistung erzeugen, und
einen Transformator (1; 1A), der auf dem Fundament im Inneren des Turms (3) angeordnet ist und die elektrische Leistung, die durch den elektrischen Generator erzeugt wird, transformiert,
wobei ein Eisenkern und ein Wicklungsdraht, der auf dem Eisenkern des Transformators angebracht ist, in einem Tank untergebracht sind und das Innere des Tanks mit einem Kühlmedium gefüllt ist, um dadurch Wärme, die an dem Eisenkern und dem Wicklungsdraht erzeugt wird, zu absorbieren und die Wärme freizusetzen, und wobei
die Anlage **dadurch gekennzeichnet ist, dass**
eine Haube (4) über den Transformator (1; 1A) gesetzt ist, so dass Luft, die Wärme von dem Transformator (1; 1A) absorbiert hat, in die Haube (4) strömt, und die Haube (4) mit einem Abluftschacht (6) verbunden ist, der sich nach oben bis zu einem oberen Abschnitt des Inneren des Turms (3) erstreckt, um die Luft, die in die Haube (4) strömt, zu dem oberen Abschnitt des Inneren des Turms (3) auszublasen.

2. Anlage zum Erzeugen von Windturbinenleistung nach Anspruch 1, wobei der Transformator (1; 1A) ein Transformator vom Typ mit gewellten Rippen ist,
wobei der Eisenkern und der Wicklungsdraht in einem Tank (2) mit gewellten Rippen des Transformators (1) untergebracht sind und das Innere des Tanks (2) mit gewellten Rippen mit dem Kühlmedium gefüllt ist, um dadurch Wärme, die an dem Eisenkern und dem Wicklungsdraht erzeugt wird, zu absorbieren und die Wärme durch den Tank (2) mit den gewellten Rippen freizusetzen, und
die Haube (4) über den Tank (2) mit den gewellten Rippen des Transformators (1; 1A) gesetzt ist, so dass Luft, die Wärme von dem Tank (2) mit den gewellten Rippen absorbiert hat, in die Haube (4) strömt.

3. Anlage zum Erzeugen von Windturbinenleistung nach Anspruch 1, wobei der Transformator (1; 1A) ein Transformator vom Radiatortyp ist,
wobei der Transformator (1; 1A) einen Transformatorhauptkörper (9), in dem der Eisenkern und der Wicklungsdraht in dem Tank, der mit dem Kühlmedium gefüllt ist, untergebracht sind, und einen Radiator (12), der mit dem Tank des Transformatorhauptkörpers (9) durch ein Rohr (10) verbunden ist, umfasst, so dass Wärme, die an dem Eisenkern und dem Wicklungsdraht erzeugt wird, durch das Kühlmedium absorbiert wird und durch das Rohr (10) von dem Radiator (12) freigesetzt wird, und
die Haube (4) über den Radiator (12) des Transformators (1; 1A) gesetzt ist, so dass Luft, die Wärme, die von dem Radiator (12) freigesetzt wird, absorbiert hat, in die Haube (4) strömt.

4. Anlage zum Erzeugen von Windturbinenleistung nach Anspruch 2 oder 3,
wobei mindestens der obere Teil des Tanks (2) mit den gewellten Rippen oder des Radiators (12) mit der Haube (4) bedeckt ist.

5. Anlage zum Erzeugen von Windturbinenleistung nach einem der Ansprüche 1 bis 3,
wobei sich der Abluftschacht (6) nach oben bis zu dem oberen Abschnitt des Turms (3) erstreckt und seine Querschnittsform rund, elliptisch oder rechteckig ist.

6. Anlage zum Erzeugen von Windturbinenleistung nach einem der Ansprüche 1 bis 5,
wobei eine zylindrische Führungsplatte (14), die zusammen mit einer Außenwand (3A) des Turms (3) eine Doppelwandstruktur bildet, innerhalb der Außenwand (3A) des Turms (3) installiert ist, um einen Strömungskanal zu bilden, der vertikal zwischen der Führungsplatte (14) und der Außenwand (3A) des Turms (3) in Verbindung steht, und ein oberes Ende und ein unteres Ende des Strömungskanals geöffnet sind, um mit dem Inneren des Turms (3) in Verbindung zu stehen.

7. Anlage zum Erzeugen von Windturbinenleistung nach den Ansprüchen 1 bis 5,
wobei Oberflächen des Turms (3), die einander zugewandt sind, und der Transformator (1; 1A) mit einer Farbe, die ein hohes Emissionsvermögen besitzt, beschichtet sind.

8. Anlage zum Erzeugen von Windturbinenleistung nach einem der Ansprüche 1 bis 7,
wobei eine innere Oberfläche der Außenwand (3A) des Turms (3A) mit Lamellen (15) versehen ist.

9. Anlage zum Erzeugen von Windturbinenleistung nach einem der Ansprüche 1 bis 8,
wobei ein Gebläse (16) in dem Abluftschacht (6) oder zwischen dem Abluftschacht (6) und der Haube (4) installiert ist.

10. Anlage zum Erzeugen von Windturbinenleistung nach einem der Ansprüche 1 bis 9,
wobei der Abluftschacht (6) für den Transformator (1; 1A) anders installiert ist als ein weiterer Abluftschacht, der mit anderer wärmeerzeugender Ausstattung als dem Transformator (1; 1A) im Inneren des Turms (3) in Verbindung steht.

11. Anlage zum Erzeugen von Windturbinenleistung nach einem der Ansprüche 1 bis 9,
wobei der Turm (3) vertikal in mehrere Blöcke geteilt ist und jeder Block mit Flanschen (21) versehen ist, die an dem oberen Ende und dem unteren Ende des Blocks nach innen vorstehen,
wobei der Turm (3) durch Verbinden der Blöcke miteinander durch Festziehen der Flansche (21) jeweils zwischen den Blöcken an dem oberen Ende und dem unteren Ende zusammengebaut ist und
wobei die zylindrischen Führungsplatten (14) zwischen den Flanschen (21) der Blöcke installiert sind und eine Innenseite der Führungsplatten (14) mit einem Fußhalt (22) zum Prüfen der Flansche (21) versehen ist, so dass keine Luft innerhalb der Führungsplatten (14) strömt, indem der Luftstromraum durch den Fußhalt (22) blockiert wird.

12. Anlage zum Erzeugen von Windturbinenleistung nach einem der Ansprüche 1 bis 11,
wobei der Turm (3) vertikal in mehrere Blöcke geteilt ist und jeder Block mit Flanschen (21) versehen ist, die an dem oberen Ende und dem unteren Ende des Blocks nach innen vorstehen,
wobei der Turm (3) durch Verbinden der Blöcke miteinander durch Festziehen der Flansche (21) jeweils zwischen den Blöcken an dem oberen Ende und dem unteren Ende zusammengebaut ist und
wobei jeder der Blöcke nur mit einer zylindrischen Führungsplatte (14) zwischen dem Flansch (21) und einem Fußhalt (22) zum Prüfen des Flansches (21) versehen ist, so dass ein Luftströmungskanal zwischen der Führungsplatte (14) und dem äußeren Turm gebildet ist.

13. Anlage zum Erzeugen von Windturbinenleistung nach Anspruch 2,
wobei der Eisenkern und der Wicklungsdraht in einem Tank (2) mit gewellten Rippen des Transformators (1; 1A) untergebracht sind und das Innere des Tanks (2) mit gewellten Rippen mit dem Kühlmedium gefüllt ist, um dadurch Wärme, die an dem Eisenkern und dem Wicklungsdraht erzeugt wird, zu absorbieren und die Wärme durch den Tank (2) mit den gewellten Rippen freizusetzen, und
ein unterer Abschnitt des Turms (3) mit einem Lufteinlass (27) versehen ist, um Luft von der Außenseite des Turms (3) in das Innere des Turms (3) aufzunehmen, und ein oberer Abschnitt des Turms (3) mit einem Luftauslass (28) versehen ist, um die Luft von dem Inneren des Turms (3) zu der Außenseite des Turms (3) abzulassen, und
wobei die Haube (4) über den Tank (2) mit den gewellten Rippen des Transformators (1; 1A) gesetzt ist, so dass die Luft von dem Lufteinlass (27) aufgenommen wird, in die Haube (4) strömt, während sie Wärme, die von dem Tank (2) mit den gewellten Rippen freigesetzt wird, absorbiert, und
wobei der Abluftschacht (6) mit der Haube (4) verbunden ist, um sich nach oben bis zu dem oberen Abschnitt des Turms (3) zu erstrecken und so dass die Luft, die Wärme absorbiert, die von dem Tank (2) mit den gewellten Rippen freigesetzt wird und in die Haube (4) strömt, in das Innere des Turms (3) abgelassen wird, und
wobei der Luftauslass (28) so konfiguriert ist, dass die Luft, die durch den Abluftschacht (6) in das Innere des Turms (3) abgelassen wird, ferner durch den Luftauslass (28) in die atmosphärische Luft außerhalb des Turms (3) abgelassen wird.

14. Anlage zum Erzeugen von Windturbinenleistung nach Anspruch 3,
wobei der Transformator (1; 1A) einen Transformatorhauptkörper (9), in dem der Eisenkern und der Wicklungsdraht in dem Tank, der mit dem Kühlmedium gefüllt ist, untergebracht sind, und einen Radiator (12), der mit dem Tank des Transformatorhauptkörpers (9) durch ein Rohr (10) verbunden ist, umfasst, so dass Wärme, die an dem Eisenkern und dem Wicklungsdraht erzeugt wird, durch das Kühlmedium absorbiert wird und durch das Rohr (10) von dem Radiator (12) freigesetzt wird, und
ein unterer Abschnitt des Turms (3) mit einem Lufteinlass (27) versehen ist, um Luft von der Außenseite des Turms (3) in das Innere des Turms (3) aufzunehmen, und ein oberer Abschnitt des Turms (3) mit einem Luftauslass (28) versehen ist, um die Luft von dem Inneren des Turms (3) zu der Außenseite des Turms (3) abzulassen, und
wobei die Haube (4) über den Radiator (12) des Transformators (1; 1A) gesetzt ist, so dass die Luft, die von dem Lufteinlass aufgenommen wird, in die Haube (4) strömt, während sie Wärme, die von dem Radiator (12) freigesetzt wird, absorbiert, und
wobei der Abluftschacht (6) mit der Haube (4) verbunden ist, um sich nach oben bis zu dem oberen Abschnitt des Turms (3) zu erstrecken und so dass die Luft, die Wärme absorbiert, die von dem Radiator (12) freigesetzt wird und in die Haube (4) strömt, in das Innere des Turms (3) abgelassen wird, und
wobei der Luftauslass (28) so konfiguriert ist, dass die Luft, die durch den Abluftschacht (6) in das Innere des Turms (3) abgelassen wird, ferner durch den Luftauslass (28) in die atmosphärische Luft außerhalb des Turms (3) abgelassen wird.

15. Anlage zum Erzeugen von Windturbinenleistung nach Anspruch 13 oder 14,
wobei der Luftauslass (28) an dem oberen Abschnitt des Turms (3) in der Nähe einer oberen Öffnung des Abluftschachts (6) vorgesehen ist.

16. Anlage zum Erzeugen von Windturbinenleistung nach einem der Ansprüche 13 bis 15,
wobei der Abluftschacht (6) für den Transformator (1; 1A) anders installiert ist als ein weiterer Abluftschacht, der mit anderer wärmeerzeugender Ausstattung als dem Transformator (1; 1A) im Inneren des Turms (3) in Verbindung steht.

17. Anlage zum Erzeugen von Windturbinenleistung nach einem der Ansprüche 13 bis 16,
wobei ein Gebläse (16) in dem Abluftschacht (6) oder zwischen dem Abluftschacht (6) und der Haube (4) installiert ist.

18. Anlage zum Erzeugen von Windturbinenleistung nach einem der Ansprüche 13 bis 17,
wobei die Außenseite des Turms (3) in der Nähe des Luftauslasses (28) mit einer Windschutzplatte (29) versehen ist, um zu verhindern, dass Wind außerhalb des Turms (3) durch den Luftauslass (28) in den Turm (3) bläst.

## Revendications

1. Installation de génération de puissance à turbine éolienne, comprenant
une tour (3) érigée sur une fondation,
une nacelle (25) prévue au sommet de la tour (3),
un générateur électrique installé dans la nacelle (25),
des pales (26) qui sont connectées au générateur électrique et qui génèrent une puissance électrique en faisant tourner le générateur électrique, et
un transformateur (1 ; 1A) qui est placé sur la fondation à l'intérieur de la tour (3) et qui transforme la puissance électrique générée par le générateur électrique,
dans laquelle un noyau en fer et un fil de bobinage monté sur le noyau en fer du transformateur sont logés dans un réservoir, et intérieur du réservoir est rempli avec un milieu de refroidissement pour absorber ainsi la chaleur générée au niveau du noyau en fer et du fil de bobinage et évacuer la chaleur, et
l'installation étant **caractérisée en ce que**
un capot (4) est placé au-dessus du transformateur (1 ; 1A) de sorte que l'air ayant absorbé la chaleur du transformateur (1 ; 1A) s'écoule en entrant dans le capot (4), et le capot (4) est connecté à un conduit d'échappement (6) qui s'étend vers le haut jusqu'à une portion supérieure de l'intérieur de la tour (3) pour laisser s'échapper l'air s'écoulant dans le capot (4) vers la portion supérieure de l'intérieur de la tour (3).

2. Installation de génération de puissance à turbine éolienne selon la revendication 1, dans laquelle le transformateur (1 ; 1 A) est un transformateur du type à nervures ondulées,
dans laquelle le noyau en fer et le fil de bobinage sont logés dans un réservoir à nervures ondulées (2) du transformateur (1), et l'intérieur du réservoir à nervures ondulées (2) est rempli avec le milieu de refroidissement pour absorber ainsi la chaleur générée au niveau du noyau en fer et du fil de bobinage et évacuer la chaleur via le réservoir à nervures ondulées (2), et
le capot (4) est placé au-dessus du réservoir à nervures ondulées (2) du transformateur (1 ; 1A) de sorte que l'air ayant absorbé la chaleur depuis le réservoir à nervures ondulées (2) s'écoule en entrant dans le capot (4).

3. Installation de génération de puissance à turbine éolienne selon la revendication 1, dans laquelle le transformateur (1, 1A) est un transformateur du type à radiateur,
dans laquelle le transformateur (1 ; 1A) comprend un corps principal de transformateur (9) dans lequel le noyau en fer et le fil de bobinage sont logés dans le réservoir rempli avec le milieu de refroidissement, et un radiateur (12) qui est connecté au réservoir du corps principal de transformateur (9) via un tube (10), de sorte que la chaleur générée au niveau du noyau en fer et du fil de bobinage est absorbée par le milieu de refroidissement et est évacuée depuis le radiateur (12) via le tube (10), et
le capot (4) est placé au-dessus du radiateur (12) du transformateur (1 ; 1A) de sorte que l'air ayant absorbé la chaleur évacuée du radiateur (12) s'écoule en entrant dans le capot (4).

4. Installation de génération de puissance à turbine éolienne selon la revendication 2 ou 3,
dans laquelle au moins la partie supérieure du réservoir à nervures ondulées (2) du radiateur (12) est couverte avec le capot (4).

5. Installation de génération de puissance à turbine éolienne selon l'une quelconque des revendications 1 à 3,
dans laquelle le conduit d'échappement (6) s'étend vers le haut jusqu'à la portion supérieure de la tour (3) et sa forme de section transversale est arrondie, elliptique ou rectangulaire.

6. Installation de génération de puissance à turbine éolienne selon l'une quelconque des revendications 1 à 5,
dans laquelle une plaque de guidage cylindrique (14), formant une structure à double paroi ensemble avec une paroi extérieure (3A) de la tour (3), est installée à l'intérieur de la paroi extérieure (3A) de la tour (3) pour former un canal d'écoulement qui communique verticalement entre la plaque de guidage (14) et la paroi extérieure (3A) de la tour, et une extrémité supérieure et une extrémité inférieure du canal d'écoulement sont ouvertes de manière à communiquer avec l'intérieur de la tour (3).

7. Installation de génération de puissance à turbine éolienne selon les revendications 1 à 5,
dans laquelle des surfaces mutuellement face-à-face de la tour (3) et du transformateur (1 ; 1A) sont revêtues avec une peinture présentant une forte émissivité.

8. Installation de génération de puissance à turbine éolienne selon l'une quelconque des revendications 1 à 7,
dans laquelle une surface intérieure de la paroi extérieure (3A) de la tour (3A) est pourvue d'ailettes (15).

9. Installation de génération de puissance à turbine éolienne selon l'une quelconque des revendications 1 à 8,
dans laquelle un ventilateur (16) est installé à l'intérieur du conduit d'échappement (6) ou entre le conduit d'échappement (6) et le capot (4).

10. Installation de génération de puissance à turbine éolienne selon l'une quelconque des revendications 1 à 9,
dans laquelle le conduit d'échappement (6) pour le transformateur (1 ; 1A) est installé différemment d'un autre conduit d'échappement communiquant avec l'équipement de génération de chaleur, autre que le transformateur (1 ; 1A) à l'intérieur de la tour (3).

11. Installation de génération de puissance à turbine éolienne selon l'une quelconque des revendications 1 à 9,
dans laquelle la tour (3) est divisée verticalement en une pluralité de blocs, et chaque bloc est doté de brides (21) qui se projettent vers l'intérieur à l'extrémité supérieure et à l'extrémité inférieure du bloc,
dans laquelle la tour (3) est assemblée en unissant les blocs les uns aux autres en serrant les brides (21) chacune entre les blocs à l'extrémité supérieure et à l'extrémité inférieure, et
dans laquelle des plaques de guidage cylindriques (14) sont installées entre les brides (21) des blocs, et l'intérieur de la plaque de guidage (14) et pourvues d'un arrêt (22) pour inspecter les brides (21) de sorte que l'air ne s'écoule pas à l'intérieur des plaques de guidage (14) en bloquant l'espace d'écoulement d'air avec l'arrêt (22).

12. Installation de génération de puissance à turbine éolienne selon l'une quelconque des revendications 1 à 11,
dans laquelle la tour (3) est divisée verticalement en une pluralité de blocs, et chaque bloc est doté de brides (21) qui se projettent vers l'intérieur à l'extrémité supérieure et à l'extrémité inférieure du bloc, dans laquelle la tour (3) est assemblée en unissant les blocs les uns aux autres en serrant les brides (21) chacune entre les blocs à l'extrémité supérieure et à l'extrémité inférieure, et
dans laquelle chacun des blocs est pourvu d'une plaque de guidage cylindrique (14) seulement entre la bride (21) et l'arrêt (22) pour inspecter la bride (21), de sorte qu'un canal d'écoulement d'air est formé entre la plaque de guidage (14) et la tour extérieure.

13. Installation de génération de puissance à turbine éolienne selon la revendication 2,
dans laquelle le noyau en fer et le fil de bobinage sont logés dans un réservoir à nervures ondulées (2) du transformateur (1 ; 1A) et l'intérieur du réservoir à nervures ondulées (2) est rempli avec le milieu de refroidissement, pour absorber ainsi la chaleur générée au niveau du noyau en fer et du fil de bobinage et évacuer la chaleur via le réservoir à nervures ondulées (2), et
une portion inférieure de la tour (3) est pourvue d'une entrée d'air (27) pour aspirer de l'air depuis l'extérieur de la tour (3) vers l'intérieur de la tour (3), et une portion supérieure de la tour (3) est pourvue d'une sortie d'air (28) pour décharger l'air depuis l'intérieur de la tour (3) vers l'extérieur de la tour (3) ; et
dans laquelle le capot (4) est placé au-dessus du réservoir à nervures ondulées (2) du transformateur (1 ; 1A) de sorte que l'air qui est aspiré depuis l'entrée d'air (27) s'écoule jusque dans le capot (4) tout en absorbant la chaleur évacuée depuis le réservoir à nervures ondulées (2), et
dans laquelle le conduit d'échappement (6) est connecté au capot (4) de manière à s'étendre vers le haut jusqu'à la portion supérieure de la tour (3), et de telle façon que l'air qui absorbe la chaleur évacuée du réservoir à nervures ondulées (2) et qui s'écoule vers l'intérieur du capot (4) est déchargé vers l'intérieur de la tour (3), et
dans laquelle la sortie d'air (28) est configurée de telle façon que l'air déchargé vers l'intérieur de la tour (3) via le conduit d'échappement (6) est en outre déchargé vers l'air atmosphérique à l'extérieur de la tour (3) via la sortie d'air (28).

14. Installation de génération de puissance à turbine éolienne selon la revendication 3,
dans laquelle le transformateur (1 ; 1A) comprend un corps principal de transformateur (9) dans lequel le noyau en fer et le fil de bobinage sont logés dans le réservoir rempli avec le milieu de refroidissement, et un radiateur (12) qui est connecté au réservoir du corps principal de transformateur (9) via un tube (10), de sorte que la chaleur générée au niveau du noyau en fer et du fil de bobinage est absorbée par le milieu de refroidissement et est évacuée hors du radiateur (12) via le tube (10), et
une portion inférieure de la tour (3) est doté d'une entrée d'air (27) pour aspirer de l'air depuis l'extérieur de la tour (3) vers l'intérieur de la tour (3), et une portion supérieure de la tour (3) est dotée d'une sortie d'air (28) pour décharger l'air depuis l'intérieur de la tour (3) vers l'extérieur de la tour (3) ; et
dans laquelle le capot (4) est placé au-dessus du radiateur (12) du transformateur (1 ; 1A) de telle façon que l'air qui est aspiré depuis l'entrée d'air s'écoule jusque dans le capot (4) tout en absorbant la chaleur évacuée depuis le radiateur (12), et
dans laquelle le conduit d'échappement (6) est connecté au capot (4) de manière à s'étendre vers le haut jusqu'à la portion supérieure de la tour (3) et de telle façon que l'air ayant absorbé la chaleur dégagée depuis le radiateur (12) et s'écoulant vers le capot (4) est déchargé à l'intérieur de la tour (3), et
dans laquelle la sortie d'air (28) est configurée de telle façon que l'air déchargé vers l'intérieur de la tour (31) via le conduit d'échappement (6) est ensuite déchargé vers l'air atmosphérique à l'extérieur de la tour (3) via la sortie d'air (28).

15. Installation de génération de puissance à turbine éolienne selon la revendication 13 ou 14,
dans laquelle la sortie d'air (28) est prévue à la portion supérieure de la tour (3) au voisinage d'une ouverture supérieure du conduit d'échappement (6).

16. Installation de génération de puissance à turbine éolienne selon l'une quelconque des revendications 13 à 15,
dans laquelle le conduit d'échappement (6) pour le transformateur (1 ; 1A) est installé différemment d'un autre conduit d'échappement qui communique avec l'équipement de génération de chaleur autre que le transformateur (1 ; 1A) à l'intérieur de la tour (3).

17. Installation de génération de puissance à turbine éolienne selon l'une quelconque des revendications 13 à 16,
dans laquelle un ventilateur (16) est installé à l'intérieur du conduit d'échappement (6), ou entre le conduit d'échappement (6) et le capot (4).

18. Installation de génération de puissance à turbine éolienne selon l'une quelconque des revendications 13 à 17,
dans laquelle l'extérieur de la tour (3) au voisinage de la sortie d'air (28) est doté d'une plaque coupe-vent (29) pour empêcher au vent à l'extérieur de la tour (3) de souffler vers l'intérieur de la tour (3) via la sortie d'air (28).
